# EUROPEAN PATENT SPECIFICATION

(11) **EP 3 252 588 B1**
(45) Date of publication and mention of the grant of the patent: **02.09.2020**
(21) Application number: 17173946.9
(22) Date of filing: 01.06.2017
(51) Int. Cl.: G06F 3/0485, G06F 3/0488

(54) **ELECTRONIC DEVICE AND METHOD FOR CONTROLLING THE SAME**
ELEKTRONISCHE VORRICHTUNG UND VERFAHREN ZUR STEUERUNG DAVON
DISPOSITIF ÉLECTRONIQUE ET SON PROCÉDÉ DE COMMANDE

(30) Priority: 01.06.2016 JP 2016110006
(43) Date of publication of application: 06.12.2017
(73) Proprietor: CANON KABUSHIKI KAISHA, Ohta-ku Tokyo 146-8501 (JP)
(72) Inventor: OIKAWA, Ryo, Ohta-ku, Tokyo 146-8501 (JP)
(74) Representative: Uffindell, Christine Helen

(56) References cited:
- EP-A1- 2 458 487

## Description

### BACKGROUND OF THE INVENTION

### Field of the Invention

The present invention particularly relates to an electronic device suitable for use in an operation in a device including a touch panel, a method for controlling an electronic device, and a storage medium.

### Description of the Related Art

In recent years, various electronic products have included touch panels. A touch panel is a device obtained by integrating a display unit and an operation unit with which a user performs an operation. The user touches the touch panel according to information displayed on the touch panel to operate an electronic product. Thus, the touch panel is an input and output interface enabling a highly intuitive operation.

In a case where a user operates the touch panel, the user performs a desired operation by moving their finger to a button displayed on the touch panel and touching the button to select the button. At this time, the user may touch the touch panel for a plurality of times until the desired operation is completed. If the user performs a plurality of touches, particularly in a case where the procedure of the operation becomes long, the operation is difficult to understand. In addition, if the procedure of the operation is long, the distance at which the user moves the finger on the touch panel may become long. Consequently, the user may feel weary of the operation of performing a touch.

In response, Japanese Patent Application Laid-Open No. 2009-245037 discusses an image display apparatus configured to display a desired image to be displayed in a multi-reproduction display manner with a touch panel operation, which facilitates access to the desired image. This image processing apparatus transitions to a first mode with a weak touch. In the first mode, the image processing apparatus can change the number of displayed images with a touch operation in a Y-direction. The image processing apparatus transitions to a second mode with a strong touch. In the second mode, the image processing apparatus brings an option into a focused state and allows a user to select from a list screen.

In the method discussed in Japanese Patent Application Laid-Open No. 2009-245037, it is possible to easily change the number of images to be subjected to list display with a touch operation in the Y-axis direction. It is, however, not possible to switch to the list display itself with a simple operation.

EP2 458 487 discloses an operation control device which includes a contact detection unit for detecting contact of an operation body with a display surface of a display unit on which information is displayed, a pressure detection unit, provided on the display unit, for detecting a pressure at which the operation body presses the display surface of the display unit, and an operation control unit for changing a display state of the information displayed on the display unit in a forward or reverse direction on the basis of an amount of pressure detected by the pressure detection unit until the operation body makes contact with and is separated from the display surface of the display unit.

### SUMMARY OF THE INVENTION

The present invention is directed to a technique for enabling a user to intuitively and easily switch to list display with a small number of touch operations to easily search for another item.

According to an aspect of the present invention, there is provided an electronic device as specified in claims 1 to 13. According to a second aspect of the present invention, there is provided a method for controlling an electronic device as specified in claim 14. According to a third aspect of the present invention, there is provided a program for causing a computer to function as the units of the electronic device, as specified in claim 15. According to a fourth aspect of the present invention, there is provided a non-transitory computer-readable storage medium having stored therein a program for causing a computer to function as the units of the electronic device, as specified in claim 16.

Further features of the present invention will become apparent from the following description of embodiments with reference to the attached drawings.

### BRIEF DESCRIPTION OF THE DRAWINGS

Fig. 1 is a block diagram illustrating an example of an internal configuration of an electronic device according to an embodiment.
Fig. 2 is a flowchart illustrating an example of a detailed processing procedure of a single-reproduction process.
Fig. 3 is a flowchart illustrating an example of a detailed processing procedure of a during-detection-of-pressure four-image multi-reproduction process.
Fig. 4 is a flowchart illustrating an example of a detailed processing procedure of a during-detection-of-pressure nine-image multi-reproduction process.
Fig. 5 is a flowchart illustrating an example of a detailed processing procedure of a multi-reproduction process.
Figs. 6A to 6G are diagrams illustrating examples of images displayed on a display.
Figs. 7A to 7C are diagrams illustrating examples where images to be subjected to multi-display change according to a position of a touch.
Figs. 8A to 8D are diagrams illustrating examples of multi-display in a horizontal direction.
Figs. 9A to 9D are diagrams illustrating examples of screens for a list of web pages and content of the web pages.
Figs. 10A to 10D are diagrams illustrating examples of screens for a list of emails and contents of the emails.

### DESCRIPTION OF THE EMBODIMENTS

A first embodiment of the present invention is described in detail below based on the accompanying drawings.

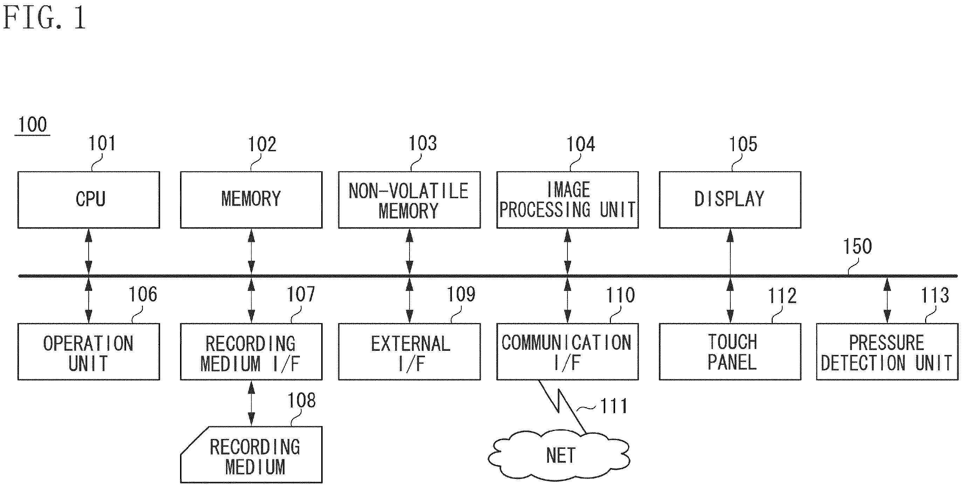

Fig. 1 is a block diagram illustrating an example of the internal configuration of an electronic device 100 according to the present embodiment.

The electronic device 100 includes a central processing unit (CPU) 101, a memory 102, a non-volatile memory 103, an image processing unit 104, a display 105, an operation unit 106, a recording medium interface (I/F) 107, an external I/F 109, a communication I/F 110, a touch panel 112, and a pressure detection unit 113. These components are connected to each other via an internal bus 150, and the components connected to the internal bus 150 can exchange data with each other via the internal bus 150.

The memory 102 includes, for example, a random-access memory (RAM) (e.g., a volatile memory with semiconductor devices).

According to a program stored, for example, in the non-volatile memory 103, the CPU 101 controls the components of the electronic device 100 using the memory 102 as a work memory.

The non-volatile memory 103 stores image data, sound data, other types of data, and various programs for the operation of the CPU 101. The non-volatile memory 103 includes, for example, a hard disk (HD) and a read-only memory (ROM).

Under the control of the CPU 101, the image processing unit 104 performs various types of image processing on, for example, image data stored in the non-volatile memory 103 or a recording medium 108, an image signal acquired via the external I/F 109, and image data acquired via the communication I/F 110. The image processing performed by the image processing unit 104 includes an analog-to-digital (A/D) conversion process, a digital-to-analog (D/A) conversion process, a compression process, a decoding process, an enlargement and reduction process (resizing), a noise reduction process, and a color conversion process. The image processing unit 104 may be configured with a dedicated circuit block for performing particular image processing. Alternatively, depending on the type of image processing, the CPU 101 can also perform the image processing according to a program without using the image processing unit 104.

Under the control of the CPU 101, the display 105 displays an image or a graphical user interface (GUI) screen, which forms a GUI. According to a program, the CPU 101 generates a display control signal and controls the components of the electronic device 100 so as to generate an image signal to be used for displaying an image on the display 105 and output the image signal to the display 105. The display 105 displays an image based on the output image signal. The electronic device 100 itself may include only an interface for outputting an image signal with which an image is to be displayed on the display 105, and the display 105 may be configured with an external monitor (e.g., television).

The operation unit 106 is an input device for receiving an operation of a user. The input device includes a text information input device such as a keyboard, a pointing device such as a mouse, a button, a dial, and a joystick.

The recording medium 108, such as a memory card, a compact disc (CD), and a digital versatile disc (DVD), is attachable to the storage medium I/F 107. Under the control of the CPU 101, the storage medium I/F 107 reads and writes data from and to the attached recording medium 108.

The external I/F 109 is an interface for connecting to an external device via a cable for wired connection or wirelessly, and inputting and outputting an image signal or a sound signal.

The communication I/F 110 is an interface for communicating with an external device or the Internet 111, and transmitting and receiving various types of data such as a file and a command.

The electronic device 100 includes the touch panel 112 capable of detecting a contact with the display 105. The touch panel 112 and the display 105 can be formed in an integrated manner. For example, the touch panel 112 is configured so that the transmittance of light does not hinder the display of the display 105. Then, the touch panel 112 is attached to an upper layer of a display surface of the display 105. Then, input coordinates on the touch panel 112 are associated with display coordinates on the display 105. Consequently, it is possible to configure a GUI as if a user can directly operate a screen displayed on the display 105. The CPU 101 can detect the following operations on the touch panel 112 (the following operations on an operation surface of the display 105) or the following states based on a touch.
- An operation that a finger or a pen that has not touched the touch panel 112 newly touches the touch panel 112, i.e., the start of a touch (hereinafter referred to as a "touch-down").
- A state where a finger or a pen is touching the touch panel 112 (hereinafter referred to as a "touch-on").
- An operation that a finger or a pen is moving while the finger or the pen keeps touching the touch panel 112 (hereinafter referred to as a "touch move").
- An operation that a finger or a pen having touched the touch panel 112 is released from the touch panel 112, i.e., the end of a touch (hereinafter referred to as a "touch-up").
- A state where nothing touches the touch panel 112 (hereinafter referred to as a "touch-off").

In response to a detection of a touch-down, simultaneously, a touch-on is also detected. After the touch-down, normally, the touch-on continues to be detected unless a touch-up is detected. A touch-on is detected also in the state where a touch move is detected. Even if a touch-on is detected, but if the touch position does not move, a touch move is not detected. After a touch-up of all the fingers or the pen having touched the touch panel 112 is detected, a touch-off is detected.

The CPU 101 is notified via the internal bus 150 of these operations or states and the position coordinates where the finger or the pen touches the touch panel 112. The CPU 101 determines, based on the information of which the CPU 101 is notified, what operation is performed on the touch panel 112. In the case of a touch move, the CPU 101 can also determine, based on changes in the position coordinates, the moving direction of the finger or the pen moving on the touch panel 112 with respect to each of the vertical and horizontal components on the touch panel 112.

Further, if a user performs a touch-down, a certain touch move, and a touch-up on the touch panel 112, such an operation is regarded as drawing a stroke. The operation of quickly drawing a stroke is referred to as a "flick". A flick is the operation of quickly moving the finger by a certain distance while the finger keeps touching the touch panel 112, and then releasing the finger from the touch panel 112 immediately after the quick movement. In other words, a flick is the operation of quickly tracing the touch panel 112 with the finger in a flipping manner. If a touch move performed by a predetermined distance or more at a predetermined speed or more is detected, and a touch-up is detected immediately after the touch move, the CPU 101 can determine that a flick is performed.

Further, if a touch move performed by a predetermined distance or more at less than a predetermined speed is detected, the CPU 101 determines that a drag is performed. If a touch move is performed by less than a predetermined distance, and an operation from a touch-down to a touch-up is detected within a predetermined time, the CPU 101 determines that a tap is performed. In addition, if an operation from a touch-down to a touch-up is performed with a touch move not being performed by a predetermined distance or more, regardless of time, the CPU 101 may determine that a tap is performed.

A touch operation for simultaneously touching a plurality of points (e.g., two points) and bringing the touch positions close to each other is referred to as a "pinch-in", and a touch operation for releasing the touch positions from each other is referred to as a "pinch-out". A pinch-out and a pinch-in are collectively referred to as a "pinch operation" (or simply as a "pinch").

The touch panel 112 may be a touch panel of any of various types such as a resistive type, a capacitive type, a surface acoustic wave type, an infrared type, an electromagnetic induction type, an image recognition type, and a photo-sensor type. A method for detecting the presence of a touch according to the presence of the contact of the finger or the pen with the touch panel 112, or a method for detecting the presence of a touch according to the presence of the approach of the finger or the pen to the touch panel 112 is included depending on the type of the touch panel can be applicable.

The pressure detection unit 113 detects the pressing force on the operation surface of the display 105. The pressure detection unit 113 can continuously detect the strength of the pressing force in a case where the display 105 is pressed with a touch operation on the display 105. The pressure detection unit 113 can be configured to detect the pressing force on the operation surface of the display 105 based on an output value from a strain gauge sensor installed in a portion that is distorted by the pressing force on the operation surface of the display 105. Alternatively, with a capacitance sensor provided parallel to the display 105, the pressure detection unit 113 calculates, from the capacitance value, the distance between the finger on the operation surface of the display 105 and the capacitance sensor resulting from the distortion of the operation surface by the pressing force on the operation surface. The pressure detection unit 113 may calculate a pressure based on the calculated distance or equate the calculated distance with a pressure. Yet alternatively, the pressure detection unit 113 may employ any other methods capable of detecting the pressing force on the operation surface of the display 105. The pressure detection unit 113 and the touch panel 112 may be formed in an integrated manner. Hereinafter, the operation of pressing the operation surface of the display 105 will be referred to as a "touch push".

Next, a description is given of an operation when a touch-down is performed in the state where an image is displayed on the display 105.

In the recording medium 108, a plurality of image files is saved with file numbers. In a case where an image of an image file saved in the recording medium 108 is displayed on the display 105, an image to be displayed can be switched by a touch operation on the touch panel 112. Further, the electronic device 100 according to the present embodiment can be switched to "one-image reproduction" for displaying a single image full-screen, "four-image reproduction" for simultaneously displaying four different images, or "nine-image reproduction" for simultaneously displaying nine different images.

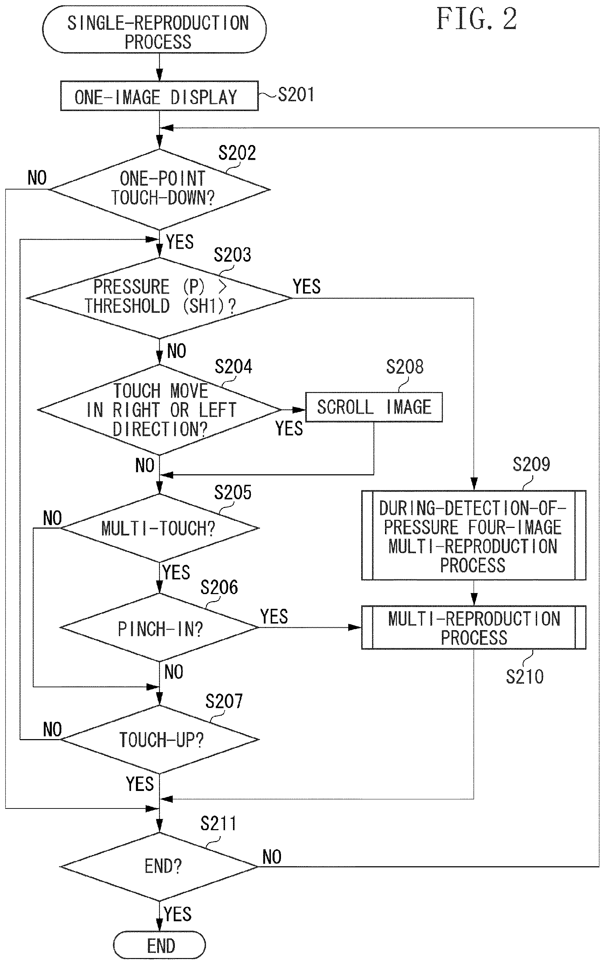

Figs. 2 to 5 illustrate examples of a series of processing procedures according to a touch operation and a touch push operation in the present embodiment. These processes are implemented by a program recorded in the non-volatile memory 103 being loaded into the memory 102, and by the CPU 101 executing the program.

Fig. 2 is a flowchart illustrating an example of the detailed processing procedure of a single-reproduction process for performing one-image reproduction to display on the display 105 an image of an image file saved in the recording medium 108. This process starts in a case where the user operates the touch panel 112 to give an instruction to reproduce an image, or processing described below proceeds to the single-reproduction process. Then, in step S201, the CPU 101 reads an image file from the recording medium 108 and displays an image of the image file on the display 105.

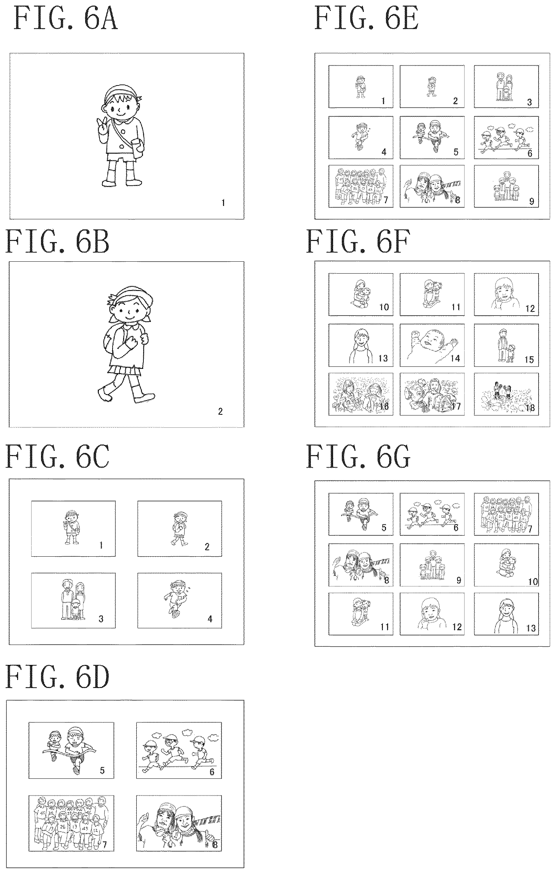

Fig. 6A illustrates an example of the image subjected to one-image display in step S201 in Fig. 2. In the one-image display, in a display area of the display 105 for displaying an image, a single image is displayed in the maximum size that allows the entirety of the image to fall within the display area. That is, in the one-image display, an image is displayed at the smaller of a display magnification at which the vertical length of the image matches the vertical length of the display area, and a display magnification at which the horizontal length of the image matches the horizontal length of the display area. The one-image display also corresponds to a detailed display screen for displaying each image with more details than multi-reproduction (list display) described below. In the examples of display illustrated in Figs. 6A to 6G, for convenience, a file number is displayed at the bottom right of each image so that the order of images to be displayed is easily understandable. The file number, however, may not actually be displayed.

Next, in step S202, the CPU 101 determines whether a one-point touch-down (a touch-down on a single point) on the touch panel 112 is detected. If, as a result of this determination, the CPU 101 detects a one-point touch-down (YES in step S202), the processing proceeds to step S203. If not (NO in step S202), the processing proceeds to step S211.

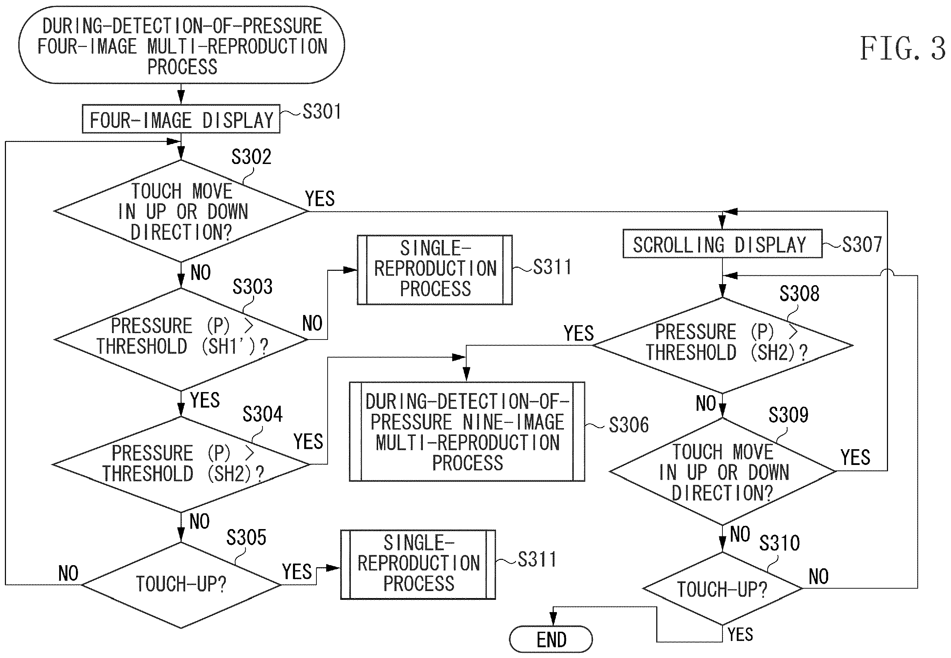

In step S203, the pressure detection unit 113 detects a pressure P of a touch push in the state where a touch-on is being performed. Then, the CPU 101 determines whether the detected pressure P of the touch push exceeds a predetermined threshold SH1. If, as a result of this determination, the pressure P exceeds the threshold SH1 (YES in step S203), the processing proceeds to step S209. If not (NO in step S203), the processing proceeds to step S204. A "during-detection-of-pressure four-image multi-reproduction process" in step S209 will be described below with reference to the flowchart in Fig. 3.

In step S204, the CPU 101 determines whether a touch move being performed in a right or left direction on the touch panel 112 is detected. If, as a result of this determination, the CPU 101 detects that a touch move in the right or left direction is being performed (YES in step S204), the processing proceeds to step S208. If not (NO in step S204), the processing proceeds to step S205.

In step S208, according to the direction of the touch move, the CPU 101 scrolls (moves the display position of) an image to be displayed on the display 105. At this time, the CPU 101 reads from the recording medium 108 an image file of an image to be displayed next with scrolling and displays the image on the display 105. In this manner, it is possible to switch from the current image to the next image or the previous image in a predetermined order (e.g., the order of file names) with scrolling. If the image is scrolled in the left direction by a touch move, the CPU 101 reads from the recording medium 108 an image file having a file number after that of the currently displayed image. If, on the other hand, the image is scrolled in the right direction by the touch move, the CPU 101 reads from the recording medium 108 an image file having a file number before that of the currently displayed image. For example, if a touch move is performed in the left direction in the state of Fig. 6A, and the image is scrolled to the left and switched to the next image, the next image is displayed as illustrated in Fig. 6B.

Next, in step S205, the CPU 101 determines whether the CPU 101 detects that a multi-touch is performed on the touch panel 112. At this time, a "multi-touch" refers to the state where a touch-on is performed at two or more points. If, as a result of this determination, the CPU 101 detects that a multi-touch is performed (YES in step S205), the processing proceeds to step S206. If not (NO in step S205), the processing proceeds to step S207.

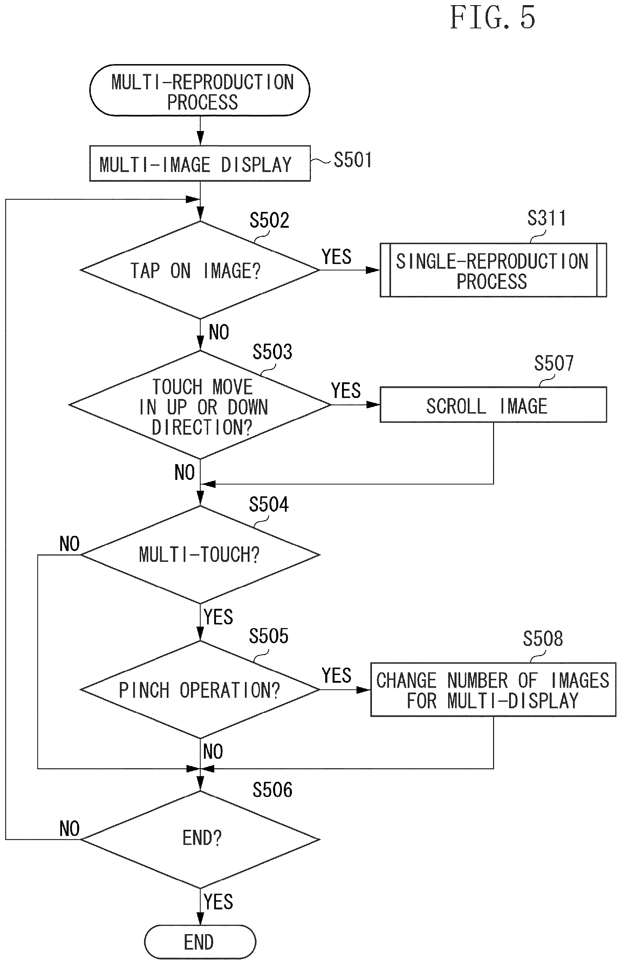

In step S206, the CPU 101 determines whether the CPU 101 detects that a pinch-in is performed on the touch panel 112. If, as a result of this determination, the CPU 101 detects that a pinch-in is performed (YES in step S206), the processing proceeds to step S210. If not (NO in step S206), the processing proceeds to step S207. A "multi-reproduction process" in step S210 will be described below with reference to a flowchart in Fig. 5.

In step S207, the CPU 101 determines whether the CPU 101 detects that a touch-up is performed on the touch panel 112. If, as a result of this determination, the CPU 101 detects that a touch-up is performed (YES in step S207), the processing proceeds to step S211. If not (NO in step S207), the processing returns to step S203.

In step S211, the CPU 101 determines whether an event for ending the image reproduction process occurs. Examples of the event for ending the image reproduction process include turning off the electronic device 100, switching to an operation mode different from that for reproducing an image, and terminating application software that is reproducing an image. If, as a result of this determination, an event for ending the image reproduction process occurs (YES in step S211), the single-reproduction process ends. If not (NO in step S211), the processing returns to step S202.

Fig. 3 is a flowchart illustrating an example of the detailed processing procedure of the during-detection-of-pressure four-image multi-reproduction process in step S209 in Fig. 2.

First, in step S301, the CPU 101 reproduces four image files saved in the recording medium 108 and displays four images on the display 105. At this time, the CPU 101 newly reads, from the recording medium 108, three image files with file numbers following that of the image file subjected to the one-image reproduction immediately before the displaying of the four images, and causes the image processing unit 104 to resize images of the image files to be displayed to sizes that allow the placement of four images. Then, the CPU 101 displays the four images.

Fig. 6C illustrates examples of the images subjected to four-image display in step S301 in Fig. 3. Four images are displayed in sizes smaller than in the one-image reproduction on the display 105. In a case where the state of the one-image reproduction transitions to the four-image reproduction with a touch push, the image displayed in one-image reproduction immediately before the touch push is included in the four images to be displayed. For example, in a case where the state where an image with a file number "1" is displayed with the one-image reproduction as in Fig. 6A transitions to the four-image reproduction, four images with file numbers "1" to "4" are displayed as illustrated in Fig. 6C.

Next, in step S302, the CPU 101 determines whether the CPU 101 detects that a touch move is performed in an up or down direction with a touch operation continuous from the touch-down determined in step S202 (a touch operation performed without releasing the touch from the touch panel 112). If, as a result of this determination, the CPU 101 detects that a touch move is performed in the up or down direction (YES in step S302), the processing proceeds to step S307. If not (NO in step S302), the processing proceeds to step S303.

In step S303, the pressure detection unit 113 detects the pressure P of the touch push in the state where the touch-on is performed. Then, the CPU 101 determines whether the detected pressure P of the touch push exceeds a predetermined threshold SH1'. Here, the relationship between the thresholds SH1 and SH1' is threshold SH1 > threshold SH1'. The threshold SH1' is set to a value with hysteresis with respect to the threshold SH1 so that an operation unintended by the user is not performed based on a change in pressure in the state where the touch push state is maintained. That is, the processing does not return to the single-reproduction process with a slight decrease in the pressure of the touch push. If, as a result of this determination, the pressure P exceeds the threshold SH1' (YES in step S303), the processing proceeds to step S304. If not (NO in step S303), the processing returns to the "single-reproduction process" in Fig. 2, which is step S311.

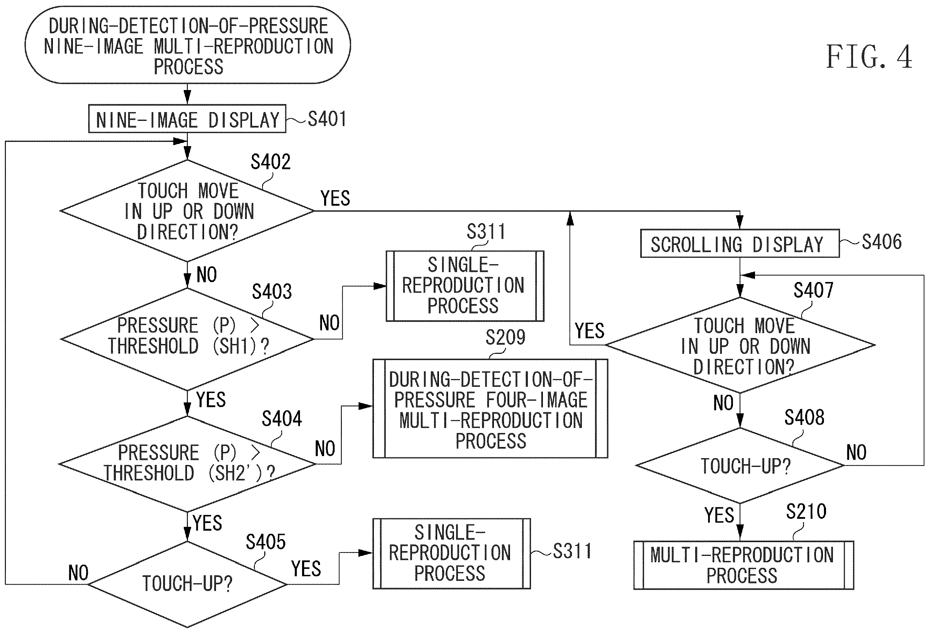

In step S304, the CPU 101 further determines whether the pressure P of the touch push exceeds a predetermined threshold SH2. Here, the threshold SH2 is a pressure greater than the thresholds SH1 and SH1'. If, as a result of this determination, the pressure P exceeds the threshold SH2 (YES in step S304), the processing proceeds to step S306. If not (NO in step S304), the processing proceeds to step S305. A "during-detection-of-pressure nine-image multi-reproduction process" in step S306 will be described below with reference to a flowchart in Fig. 4.

In step S305, the CPU 101 determines whether the CPU 101 detects that a touch-up is performed on the touch panel 112. If, as a result of this determination, the CPU 101 detects that a touch-up is performed (YES in step S305), the processing proceeds to the "single-reproduction process" in step S311. If not (NO in step S305), the processing returns to step S302.

Once a touch move in the up or down direction (the operation of scrolling the images) is performed, the processing proceeds to step S307, and the processes of steps S303 to S305 are not performed. That is, once a touch move in the up or down direction (the operation of scrolling the images) is performed, the number and the sizes of images to be displayed are not changed even if the pressure changes by a touch push. On the other hand, after the state of the one-image reproduction is switched to the four-image reproduction by a touch push, and if the pressure P of the touch push is made less than or equal to the threshold SH1' without a touch move in the up or down direction, or a touch-up is performed, the four-image reproduction can return to the previous one-image reproduction. In this case, an image to be displayed in the one-image reproduction is the same image as that before the touch push.

If the pressure P of the touch push is made less than or equal to the threshold SH1' without a touch move, and even if the processing returns to the single-reproduction process in Fig. 2, the touch-on continues to be performed. In such a case, after the process of step S201, the process of step S202 is skipped, and the processing proceeds to step S203. That is, various touch operations and a touch push operation in the single-reproduction process may be enabled in the state where the touch-on continues to be performed. With such a configuration, even if the processing proceeds to the processing in Fig. 3 by the user inadvertently performing a strong touch without intending to perform a touch push in the state of the one-image reproduction, the user can return to the one-image reproduction by weakening the pressure of the touch push, and perform an intended operation.

Conversely, in a case where the processing returns to the single-reproduction process in Fig. 2, the determination may be NO in step S202 after the process of step S201 so long as the touch continues to be performed. In this manner, various touch operations and a touch push operation in the single-reproduction process may not be allowed unless the touch is released once and a touch-down is performed again.

In step S307, according to whether the direction of the touch move is the up direction or the down direction, the CPU 101 scrolls images to be displayed on the display 105. The CPU 101 newly reads, from the recording medium 108, images to be newly displayed with scrolling. If the images are scrolled in the down direction, the CPU 101 reads four image files with file numbers before those of the currently displayed images. If the images are scrolled in the up direction, the CPU 101 reads four image files with file numbers after those of the currently displayed images. The image processing unit 104 resizes images of the newly read four image files to sizes that allow the placement of four images. Then, the CPU 101 displays the four images. For example, if a touch move is performed in the up direction in the state where the four images with the file numbers "1" to "4" are displayed as in Fig. 6C, the images can be scrolled upward as a whole, and four images with file numbers "5" to "8" can be displayed as illustrated in Fig. 6D.

Next, in step S308, the pressure detection unit 113 detects the pressure P of a touch push in the state where the touch-on is performed. Then, the CPU 101 determines whether the detected pressure P exceeds the threshold SH2. If, as a result of this determination, the pressure P exceeds the threshold SH2 (YES in step S308), the processing proceeds to the "during-detection-of-pressure nine-image multi-reproduction process" in step S306. If not (NO in step S308), the processing proceeds to step S309.

In step S309, the CPU 101 determines again whether the CPU 101 detects that a touch move is performed in the up or down direction. If, as a result of this determination, the CPU 101 detects that a touch move is performed in the up or down direction (YES in step S309), the processing returns to step S307. If not (NO in step S309), the processing proceeds to step S310.

In step S310, the CPU 101 determines whether the CPU 101 detects that a touch-up is performed on the touch panel 112. If, as a result of this determination, the CPU 101 detects that a touch-up is performed (YES in step S310), the "during-detection-of-pressure four-image multi-reproduction process" ends, and the processing proceeds to step S210 in Fig. 2. If not (NO in step S310), the processing returns to step S308.

Fig. 4 is a flowchart illustrating an example of the detailed processing procedure of the during-detection-of-pressure nine-image multi-reproduction process in step S306 in Fig. 3.

First, in step S401, the CPU 101 reproduces nine image files saved in the recording medium 108 and displays nine images on the display 105. At this time, the CPU 101 newly reads, from the recording medium 108, five image files with file numbers following those of the image files displayed with the four-image reproduction immediately before the display of the nine images and causes the image processing unit 104 to resize images of the image files to be displayed to sizes that allow the placement of nine images. Then, the CPU 101 displays the nine images.

Fig. 6E illustrates examples of the images subjected to nine-image display in step S401 in Fig. 4. If the state where the images with the file numbers "1" to "4" are displayed as in Fig. 6C transitions to the nine-image reproduction by a user strengthening the pressure of the touch push, nine images with file numbers "1" to "9" are displayed as illustrated in Fig. 6E.

Next, in step S402, the CPU 101 determines whether the CPU 101 detects that a touch move is performed in the up or down direction. If, as a result of this determination, the CPU 101 detects that a touch move is performed in the up or down direction (YES in step S402), the processing proceeds to step S406. If not (NO in step S402), the processing proceeds to step S403.

In step S403, the pressure detection unit 113 detects the pressure P of the touch push in the state where the touch-on is performed. Then, the CPU 101 determines whether the detected pressure P of the touch push exceeds the threshold SH1. If, as a result of this determination, the pressure P of the touch push exceeds the threshold SH1 (YES in step S403), the processing proceeds to step S404. If not (NO in step S403), the processing proceeds to the "single-reproduction process" in step S311.

Next, in step S404, the CPU 101 further determines whether the pressure P of the touch push exceeds a predetermined threshold SH2'. Here, the relationship between the thresholds SH2, SH2', SH1, and SH1' are threshold SH2 > threshold SH2' > threshold SH1 > threshold SH1'. The value of the threshold SH2' is set to a value with hysteresis with respect to the threshold SH2 so that an operation unintended by the user is not performed based on a change in pressure in the state where the touch push state is maintained. That is, the processing does not return to the during-detection-of-pressure four-image multi-reproduction process with a slight decrease in the pressure of the touch push. If, as a result of this determination, the pressure P exceeds the threshold SH2' (YES in step S404), the processing proceeds to step S405. If not (NO in step S404), the processing proceeds to the "during-detection-of-pressure four-image multi-reproduction process" in step S209.

In step S405, the CPU 101 determines whether the CPU 101 detects that a touch-up is performed on the touch panel 112. If, as a result of this determination, the CPU 101 detects that a touch-up is performed (YES in step S405), the processing proceeds to the "single-reproduction process" in step S311. If not (NO in step S405), the processing returns to step S402.

As in the during-detection-of-pressure four-image multi-reproduction process, once a touch move in the up or down direction (the operation of scrolling the images) is performed, the processing proceeds to step S406, and the processes of steps S403 to S405 are not performed. That is, once a touch move in the up or down direction (the operation of scrolling the images) is performed, the number and the sizes of images to be displayed are not changed even if the pressure changes by a touch push. Meanwhile, after the state of the four-image reproduction is switched to the nine-image reproduction with a touch push, and if the pressure P of the touch push is made greater than the threshold SH1 and less than or equal to the threshold SH2' with a touch move not being performed in the up or down direction, the nine-image reproduction can return to the previous four-image reproduction. In this case, images to be displayed in the four-image reproduction are the same images as those in the previous four-image reproduction.

In a case where the pressure P of the touch push is made less than or equal to the threshold SH2' with a touch move not being performed in the up or down direction, and even if the processing returns to the during-detection-of-pressure four-image multi-reproduction process in Fig. 3, the touch continues to be performed. Various touch operations and a touch push operation in the during-detection-of-pressure four-image multi-reproduction process can be performed with the touch not being released in this state. In such a manner, even if the processing proceeds to Fig. 4 by the user inadvertently performing a strong touch without intending to perform a touch push in the state of the four-image reproduction, the user can return to the four-image reproduction by weakening the pressure of the touch and perform an intended operation. The user can also decrease the pressure P of the touch push to less than or equal to the pressure of the threshold SH1 in the during-detection-of-pressure nine-image multi-reproduction process to return to the one-image reproduction, and continue the touch operation in this state without releasing the touch.

In step S406, according to whether the direction of the touch move is the up direction or the down direction, the CPU 101 scrolls images to be displayed on the display 105. The CPU 101 newly reads, from the recording medium 108, images to be displayed with scrolling. In a case where the images are scrolled in the down direction, the CPU 101 reads nine image files with file numbers before those of the currently displayed images. In a case where the images are scrolled in the up direction, the CPU 101 reads nine image files with file numbers after those of the currently displayed images. The image processing unit 104 resizes images of the newly read nine image files to sizes that allow the placement of nine images. Then, the CPU 101 displays the nine images. For example, if a touch move is performed in the up direction in the state where the nine images with the file numbers "1" to "9" are displayed as in Fig. 6E, the images can be scrolled upward as a whole, and nine images with file numbers "10" to "18" can be displayed as illustrated in Fig. 6F. For example, if a touch move is performed in the down direction in the state where the nine images with the file numbers "10" to "18" are displayed as in Fig. 6F, the images can be scrolled downward as a whole, and the nine images with the file numbers "5" to "13" can be displayed as illustrated in Fig. 6G.

Next, in step S407, the CPU 101 determines whether the CPU 101 detects that a touch move is performed in the up or down direction. If, as a result of this determination, the CPU 101 detects that a touch move is performed in the up or down direction (YES in step S407), the processing returns to step S406. If not (NO in step S407), the processing proceeds to step S408.

In step S408, the CPU 101 determines whether the CPU 101 detects that a touch-up is performed on the touch panel 112. If, as a result of this determination, the CPU 101 detects that a touch-up is performed (YES in step S408), the processing proceeds to the "multi-reproduction process" in step S210. If not (NO in step S408), the processing returns to step S407.

Fig. 5 is a flowchart illustrating an example of the detailed processing procedure of the multi-reproduction process in step S210 in Fig. 2. This process is a multi-reproduction process in the state where a touch push is not detected. The processing proceeds to this process in a case where during the four-image display or the nine-image display performed with a touch push, scrolling display is performed without the touch being released, and then, a touch-up is performed.

In step S501, the CPU 101 reproduces a plurality of image files saved in the recording medium 108 and displays a plurality of images on the display 105. In the present embodiment, the number of images to be subjected to the multi-reproduction is four or nine. In a case where, after scrolling display is performed, a touch up is performed during the during-detection-of-pressure four-image multi-reproduction process or the during-detection-of-pressure nine-image multi-reproduction process, and if a touch-up is performed, the images displayed on the display 105 when the touch-up is performed are displayed as they are.

Next, in step S502, the CPU 101 determines whether the CPU 101 detects that a tap is performed on any one of the plurality of displayed images. If, as a result of this determination, the CPU 101 detects that a tap is performed on any one of the images (YES in step S502), the processing proceeds to the single-reproduction process in step S311. If not (NO in step S502), the processing proceeds to step S503. If the processing proceeds to the single-reproduction process, the image on which the tap is performed is subjected to the one-image display. That is, the details of an image (an item) selected by the user from among the plurality of images (items) displayed in a list are displayed.

In step S503, the CPU 101 detects a touch-on on the touch panel 112 and determines whether the CPU 101 detects that a touch move is performed in the up or down direction. If, as a result of this determination, the CPU 101 detects that a touch move is performed in the up or down direction (YES in step S503), the processing proceeds to step S507. If not (NO in step S503), the processing proceeds to step S504.

In step S507, according to the direction of the touch move, the CPU 101 scrolls images to be displayed on the display 105. The CPU 101 newly reads, from the recording medium 108, images to be displayed with scrolling. In a case where the images are scrolled in the down direction, the CPU 101 reads image files with file numbers before those of the currently displayed images. In a case where the images are scrolled in the up direction, the CPU 101 reads image files with file numbers after those of the currently displayed images. The number of image files to be read is determined based on the number of images to be subjected to the multi-reproduction. The image processing unit 104 resizes images of the read image files to sizes that allow placement for the multi-reproduction display. Then, the CPU 101 displays these images.

Next, in step S504, the CPU 101 determines whether the CPU 101 detects that a multi-touch is performed on the touch panel 112. If, as a result of this determination, the CPU 101 detects that a multi-touch is performed (YES in step S504), the processing proceeds to step S505. If not (NO in step S504), the processing proceeds to step S506.

In step S505, the CPU 101 determines whether the CPU 101 detects that a pinch operation (a pinch-in or a pinch-out) is performed. If, as a result of this determination, the CPU 101 detects that a pinch operation is performed (YES in step S505), the processing proceeds to step S508. If not (NO in step S505), the processing proceeds to step S506.

In step S508, the CPU 101 changes the number of images to be subjected to the multi-reproduction. That is, if a pinch-in is performed, the CPU 101 increases the number of images to be subjected to the multi-reproduction and reduces the size of each image to be displayed. For example, the four-image display transitions to the nine-image display. In a case where a pinch-out is performed, the CPU 101 reduces the number of images to be subjected to the multi-reproduction and increases the size of each image to be displayed. For example, the nine-image display transitions to the four-image display, or the four-image display transitions to the one-image display. In a case where a pinch-in is performed when the nine-image display is performed, the number of images is not changed.

In step S506, the CPU 101 determines whether the multi-reproduction process ends. This determination is the determination of whether the number of images to be displayed becomes one by the process of step S508. If, as a result of this determination, the multi-reproduction process ends (YES in step S506), the process in Fig. 5 ends, and the processing proceeds to step S211 in Fig. 2. If not (NO in step S506), the processing returns to step S502.

In the present embodiment, in a case where, after a touch push is performed, a touch move is performed in the up or down direction, the multi-reproduction state is maintained. Alternatively, only in a case where a touch push is performed, the current state may transition to the multi-reproduction state. Then, even after a touch move is performed, but if a touch-on is canceled, the current state may return to the single-reproduction state. Furthermore, in the present embodiment, in a case where a touch move is performed in the up or down direction, scrolling display is performed. Alternatively, in a case where a touch move is performed in the right or left direction, scrolling display may be performed.

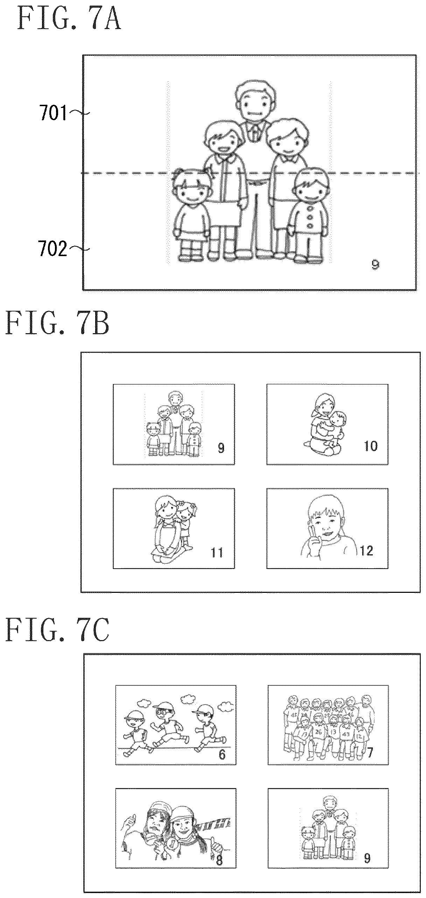

In the one-image reproduction, images to be subjected to the four-image display may differ according to the position of a touch push. With reference to Figs. 7A to 7C, a description is given below of the difference between multi-display screens displayed on the display 105 according to the position of a touch push.

For example, as illustrated in Fig. 7A, in a case where a touch push is performed on an area 701 on an upper side of a screen in the state where the image with the file number "9" is subjected to the one-image display, the four images with the file numbers "9" to "12" are displayed as illustrated in Fig. 7B. In such a case, images with file numbers following that of the image subjected to the one-image display are displayed. Thus, it is possible to visually confirm images to be displayed when a touch move is performed in the down direction.

As illustrated in Fig. 7A, when a touch push is performed on an area 702 on a lower side of the screen in the state where the image with the file number "9" is subjected to the one-image display, the four images with the file numbers "6" to "9" are displayed as illustrated in Fig. 7C. In this case, images with file numbers before the number of the image subjected to the one-image display are displayed. Thus, it is possible to visually confirm images to be displayed when a touch move is performed in the up direction.

As described above, according to the present embodiment, changing the pressing force of a touch push in the single-reproduction process switches from the one-image display to the multi-image display. Further strengthening the pressing force increases the number of images to be subjected to the multi-reproduction. With this configuration, in a case where a desired item is selected from among a plurality of images, it is possible to easily select the desired image with a small number of touch operations and an intuitive touch operation.

A second embodiment of the present invention will be described below. In the first embodiment, in performing the multi-reproduction, images are arranged and displayed in a vertically and horizontally uniform matrix. Alternatively, images to be subjected to the multi-reproduction may be placed in a single horizontal row. In the present embodiment, a description is given below of an example where images to be subjected to the multi-reproduction are arranged in a single horizontal row. The internal configuration of an electronic device according to the present embodiment is similar to that in Fig. 1 and thus the description thereof is omitted here. Regarding processing procedures according to the present embodiment, basically, portions similar to those in Figs. 2 to 5 are not described here. The differences from the first embodiment are described below.

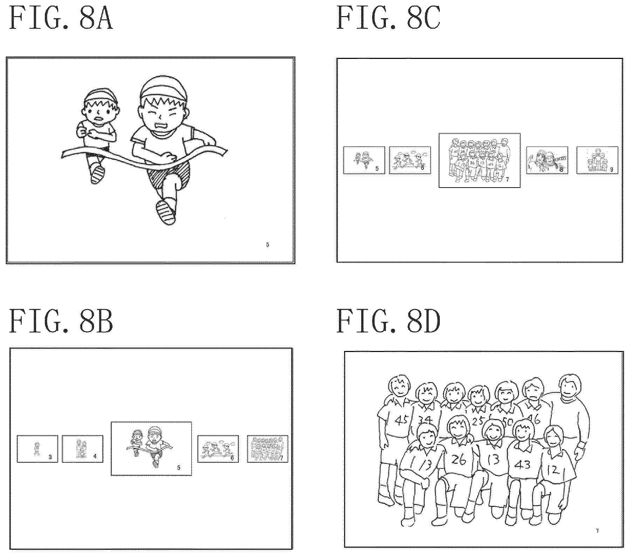

Figs. 8A to 8C are diagrams illustrating an example of screen transition when the multi-reproduction is performed in the horizontal direction.

If a touch push is executed in the state illustrated in Fig. 8A, and the pressure P of the touch push exceeds the threshold SH1, for example, the current screen switches to a multi-reproduction screen on which images are arranged in a single horizontal row as illustrated in Fig. 8B. In step S301 in Fig. 3, the CPU 101 places the image subjected to the one-image display in the middle and arranges images before and after the image in the order of file numbers, thereby performing multi-display on these images. Here, the image placed in the middle is displayed in a size slightly larger than the other images. In the present embodiment, a during-detection-of-pressure five-image multi-reproduction process is performed instead of the during-detection-of-pressure four-image multi-reproduction process. However, the number of images to be subjected to the multi-display may be any number. Further, the number of images to be subjected to the multi-display may be changed according to the degree of the pressure of the touch push.

After the one-image display is switched to the multi-display by a touch push, and if the state of the touch push is canceled (the pressure P is less than or equal to the threshold SH1') without performing a touch move, or a touch-up is performed, the multi-display screen returns to the single-reproduction state. At this time, the multi-display screen returns to the single-reproduction state without wait for the lapse of a predetermined time. After the one-image display is switched to the multi-display by a touch push, and if a touch move is performed, images to be subjected to the multi-reproduction are scrolled according to the direction of the move. In the first embodiment, scrolling display is performed if a touch move is performed in the up or down direction (or alternatively in the right or left direction), scrolling display is performed. In the present embodiment, if a touch move is performed in the right or left direction, scrolling display is performed. In the present embodiment, in a case where a touch move is performed in the right or left direction, scrolling display is performed to change a part of the group of images displayed at that time. That is, scrolling display is performed to shift images frame by frame.

Fig. 8C illustrates an example of the multi-display when a touch move is performed in the left direction in the state illustrated in Fig. 8B. In the present embodiment, unlike the first embodiment, even after scrolling display is performed with a touch move, if the state of a touch push is canceled, or a touch-up is performed, the multi-reproduction state returns to the single-reproduction state. At this time, even if the state of the touch push is canceled, or the touch-up is performed, the multi-reproduction state may not immediately return to the single-reproduction state. Then, after the lapse of a predetermined time, the multi-reproduction state may return to the single-reproduction state. In such a manner, in a case where a touch move is repeatedly performed to scroll images by a large amount, it is possible to prevent the multi-reproduction state from frequently returning to the single-reproduction state.

In returning from the multi-reproduction state to the single-reproduction state, control is performed so that the image displayed in the middle is displayed. For example, in a case where the multi-reproduction state returns to the single-reproduction state in response to, for example, a touch-up in the state illustrated in Fig. 8C, an image is displayed as illustrated in Fig. 8D. Alternatively, control may be performed so that if a tap is performed in the multi-reproduction state, the multi-reproduction state returns to the single-reproduction state. Yet alternatively, control may be performed so that if a touch operation is not performed for a predetermined time or more, the multi-reproduction state returns to the single-reproduction state.

In the present embodiment, in a case where the user selects a desired image by a touch move, it is assumed that the user moves the desired image to the middle. Thus, there is no need for a configuration in which the processing proceeds to the multi-reproduction process, and the user is allowed to tap and select a desired image as in the first embodiment. In the present embodiment, an image placed in the middle when the state of a touch push is canceled (that is, the pressure P of the touch push became less than or equal to the threshold SH1') or a touch-up is performed is regarded as a desired image, and the multi-reproduction state returns to the single-reproduction state. As in the first embodiment, the multi-reproduction state may not return to the single-reproduction state.

According to the present embodiment described above, compared with the first embodiment, it is possible to omit the operation of switching to the multi-reproduction state with a touch push, performing a touch move, and then returning to the single-reproduction state. The present embodiment excludes the need for the operation of selecting and tapping any one of images subjected to the multi-reproduction. Accordingly, with a touch operation within the reach of a single finger of one hand holding the electronic device, it is possible to perform the operation of, for example, transitioning to the multi-reproduction, searching for an image by scrolling in the multi-reproduction, and placing a desired image in the middle to return to the single-reproduction. Furthermore, in a case where a desired item is selected from among a plurality of images, a user can easily select the desired image with a small number of touch operations and an intuitive touch operation.

A third embodiment of the present invention will be described below. In the first and second embodiments, examples have been described where an image is subjected to single-reproduction, or images are subjected to multi-reproduction. In the present embodiment, an example is described where the present invention is applied to other than a list of images. The internal configuration of an electronic device according to the present embodiment is similar to that in Fig. 1, and thus the description thereof is omitted here. Regarding processing procedures according to the present embodiment, basically, portions similar to those in Figs. 2 to 5 are not described here. The differences from the first embodiment are described below.

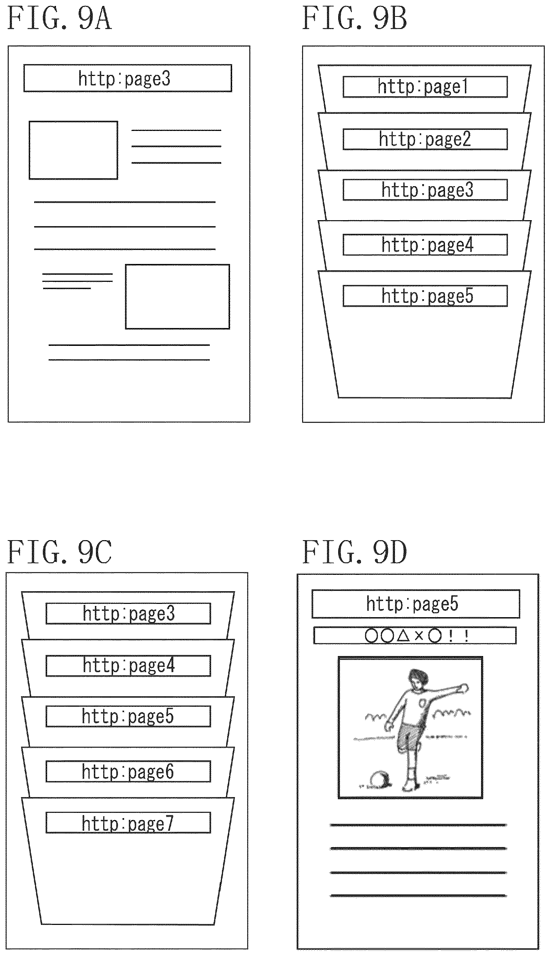

Figs. 9A to 9D are diagrams each illustrating an example of screen transition when the present invention is applied to a web browser.

Fig. 9A illustrates an example of a screen on which a web browser displays information on a particular web page. In the case of a web browser, the CPU 101 acquires information on a page to be displayed from the communication I/F 110 via the Internet 111 and displays a detailed information display screen (a content display screen) for this page on the display 105. Thus, the example illustrated in Fig. 9A corresponds to the single-reproduction state in the first embodiment. If a touch push is executed in this state, a list of currently opened web pages is displayed as illustrated in Fig. 9B. The state of this list display corresponds to the multi-reproduction state during the detection of the pressure. The number of web pages to be subjected to the list display may be any number, and the number of the web pages to be subjected to the list display may be changed according to the degree of the pressure of the touch push.

If a touch move is performed in the state of the list display, the list of web pages is scrolled according to the direction of the move. Fig. 9C illustrates an example of the list display in a case where a touch move has been performed in the down direction on the screen illustrated in Fig. 9B. In a case where the state of the list display returns to the state where a particular web page is displayed, control is performed so that a web page corresponding to the position of a tap on a selected item is displayed. Fig. 9D illustrates an example of a screen in a case where a tap has been performed on a web browser corresponding to the fifth page, which is placed in the middle of the list display illustrated in Fig. 9C.

In the present embodiment, in the processes described with reference to Figs. 2 to 5, the one-image reproduction process is replaced by the process of displaying the screen illustrated in Fig. 9A or 9D, and the four-image reproduction process is replaced by the process of displaying the screen illustrated in Fig. 9B or 9C. The present embodiment is similar in other respects to the first embodiment. In a case where more web pages are subjected to the list display as in the nine-image reproduction in the first embodiment, a list screen for more web pages than the examples illustrated in Figs. 9B and 9C may be able to be displayed.

Accordingly, the aforementioned configurations enable a user to easily select the desired web page with a small number of touch operations and an intuitive touch operation in selecting a desired web page from among a plurality of opened web pages.

A fourth embodiment of the present invention will be described below. In the third embodiment, an example has been described where a list of web pages is displayed. In the present embodiment, an example is described where information about an email is displayed. The internal configuration of an electronic device according to the present embodiment is similar to that in Fig. 1 and thus the description thereof is omitted. In processing procedures according to the present embodiment, basically, portions similar to those in Figs. 2 to 5 are not described here. The differences from the first embodiment are described below.

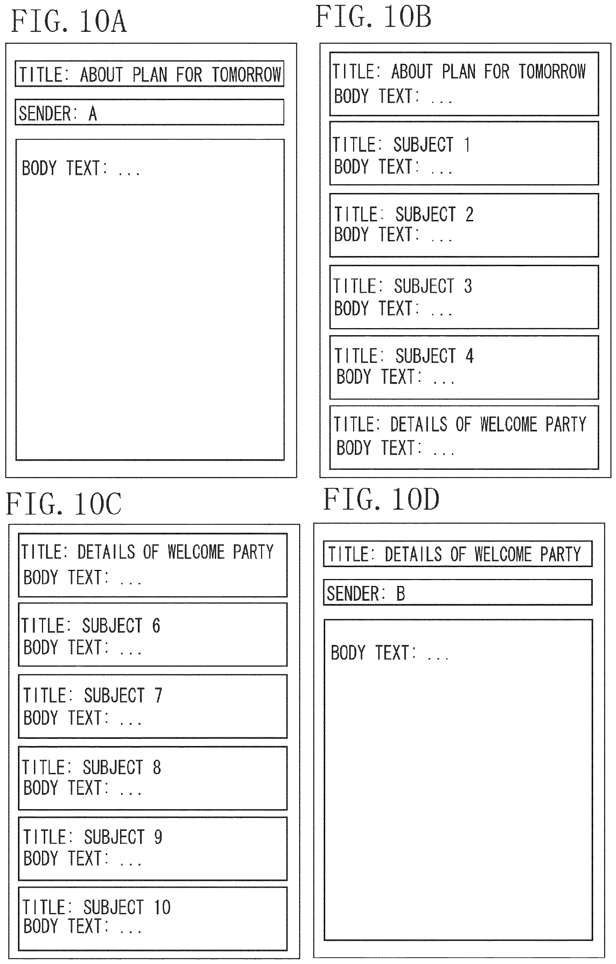

Figs. 10A to 10D are diagrams illustrating an example of screen transition when the present invention is applied to an email client.

Fig. 10A illustrates an example of a screen on which information (body text) about a particular email is displayed. The example illustrated in Fig. 10A corresponds to the single-reproduction state in the first embodiment. In a case where a touch push is executed in this state, a list of received emails is displayed as illustrated in Fig. 10B. The state of this list display corresponds to the multi-reproduction state during the detection of the pressure. The list display is performed in such a manner that the amount of information is reduced and, for example, only a title and a single line of body text is to be displayed in the list. The number of emails to be subjected to the list display may be any number, and the number of emails to be subjected to the list display may be changed according to the degree of the pressure of the touch push.

In response to a touch move performed in the state of the list display, the list of emails to be subjected to the list display is scrolled according to the direction of the move. Fig. 10C illustrates an example of the list display of emails in a case where a touch move has been performed in the down direction in the state illustrated in Fig. 10B. In a case where the state of the list display returns to the state where a particular email is displayed, control is performed so that the detailed information about an email corresponding to the position of a tap on a selected item is displayed. Fig. 10D illustrates an example of a screen in a case where a tap is performed on the item of an email placed at the top of the list display illustrated in Fig. 10C.

Performing the processes described with reference to Figs. 2 to 5 with the replacing of the one-image reproduction with the process of displaying the screen in Fig. 10A or 10D, and with the replacing the four-image reproduction with the process of displaying the screen in Fig. 10B or 10C enables the above screen transition control. The present embodiment is similar in other respects to the first embodiment. As in the nine-image reproduction in the first embodiment, a list screen for more emails than the examples illustrated in Figs. 10B and 10C may be able to be displayed.

Accordingly, the aforementioned configuration enables the user to easily select the email with a small number of touch operations and an intuitive touch operation in selecting a desired email from among a plurality of emails.

The present invention is also applicable to, for example, the following screens each displaying detailed information (herein after referred to as a content display screen) and list screens in addition to the above images, web pages, and emails.
- A content display screen for a single document (e.g., a Word file or a text file) and a list screen for a plurality of documents.
- A content display screen for a single file and a list screen for a plurality of files.
- A content display screen for a single folder (directory) and a list screen for a plurality of folders (directories).
- A content display screen for a single composition, album, or artist and a list screen for a plurality of compositions, albums, or artists.
- A content display screen (e.g., a reproduction screen) for a single moving image and a list screen for a plurality of moving images.
- A content display screen for a single wireless connection destination and a list screen for a plurality of wireless connection destinations.
- A content display screen (e.g., a work screen) for a single piece of application software and a list screen for a plurality of pieces of application software.
- A content display screen for a single message (talk) target and a list screen for a plurality of message (talk) targets.
- A content display screen for a single posted article and a list screen for a plurality of posted articles.

Content display screens and list screens to which the present invention is applicable are not limited to the above.

The description has been given on the assumption that the CPU 101 controls the above various types of control. Alternatively, a single piece of hardware may control the above various types of control. Yet alternatively, a plurality of pieces of hardware may share processing to control the entirety of the apparatus.

While the present invention has been described in detail based on its suitable embodiments, the present invention is not limited to these specific embodiments. The present invention also includes various forms without departing from the scope of the invention. Further, the above embodiments merely illustrate embodiments of the present invention, and can also be appropriately combined with each other.

Further, the above embodiments have been described taking as an example a case where the present invention is applied to an electronic device. The present invention, however, is not limited to this example, and is applicable to any apparatus including a touch panel and capable of detecting the pressure of a touch push. That is, the present invention is applicable to, for example, a personal computer, a personal digital assistant (PDA), a mobile phone terminal, a mobile image viewer, a printer apparatus including a display, a digital photo frame, a music player, and a game apparatus. Furthermore, the present invention is also applicable to an electronic book reader, a tablet terminal, a smartphone, a projection apparatus, a household electrical appliance apparatus including a display, and an in-car apparatus.

According to the present invention, it is possible for a user to intuitively and easily switch to list display with a small number of touch operations.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of the appended set of claims.

## Claims

1. A method for controlling an electronic device, the method comprising:
detecting a touch operation on an operation surface;
detecting a pressing force, on the operation surface, of the detected touch operation; and
performing control so that, in a case where a pressing force exceeding a first pressure (SH1) is detected while detailed information about a particular item is displayed as a detailed information display screen on a display means, the display of the display means is switched to a list screen for displaying a plurality of items;
wherein control is performed so that in a case where, after the display of the display means is switched to the list screen:
in a case where it is detected that an operation of moving a touch position is performed (S302-YES) after the switching, scrolling display is performed switching at least some of the plurality of items displayed on the list screen, until (S308-YES) the detected pressing force exceeds a second pressure (SH2) greater than the first pressure (SH1), or until the touch is released (S310-YES), and in a case the pressing force exceeds the second pressure (SH2), the display of the display means is switched to another list screen for displaying more items than the list screen (S306);
in a case where, without detection of an operation of moving a touch position (S302-NO) the detected pressing force becomes less than or equal to a third pressure (SH1'; S303-NO)less than the first pressure (SH1), the display is switched (S311) back to the detailed information display screen for displaying detailed information about the particular item,
if instead the detected pressing force exceeds the second pressure (SH2; S304-YES) greater than the first pressure (SH1), the display of the display means is switched to the another list screen for displaying more items than the list screen;
and wherein each of the plurality of items is an image, and the detailed information display screen is a screen on which a single image is displayed.

2. The method according to claim 1, comprising, in response to a touch operation for selecting any of the plurality of items displayed on the list screen, performing control so that the list screen is switched to a screen for displaying detailed information about the item selected with the touch operation.

3. The method according to claim 1 or 2, further comprising performing control so that, in a case where the display means is displaying detailed information about a particular item, an operation of moving a touch position is performed and the detected pressing force does not exceed the first pressure, the display of the display means is switched to a detailed information display screen for another item different from the particular item (S204).

4. The method according to any one of claims 1 to 3,
wherein a plurality of touch operations are detected, and
wherein, in a case where a plurality of detected touch positions come close to each other while the display means is displaying detailed information about a particular item, performing control so that the display of the display means is switched to a list screen for displaying a plurality of items (S206 YES, S210).

5. The method according to any one of claims 1 to 4, comprising perform control so that, in a case where the list screen is displayed in response to a detected pressing force exceeding the first pressure while the display means is displaying detailed information about a particular item, a plurality of items to be displayed on the list screen depends on a detected position of a touch, and the detected pressing force exceeding the first pressure.

6. An electronic device comprising:
touch detection means (112) configured to detect a touch operation on an operation surface;
pressure detection means configured to detect a pressing force, on the operation surface, of the touch operation detected by the touch detection means; and
display control means (101) configured to carry out the method of claims 1-5.

7. The electronic device according to claim 6, wherein the operation surface is a display surface of the display means.

8. A computer program for causing the device of any of claims 6 or 7 to carry out the steps of the method of any of claims 1 to 5.

9. A computer-readable storage medium storing a program according to claim 8.

## Patentansprüche

1. Verfahren zum Steuern einer elektronischen Vorrichtung, umfassend:
Detektieren einer Berührungsbedienung auf einer Bedienungsoberfläche;
Detektieren einer Druckkraft der detektierten Berührungsbedienung auf der Bedienungsoberfläche; und
Durchführen einer Steuerung derart, dass die Anzeige einer Anzeigeeinrichtung auf einen Listenbildschirm zum Anzeigen mehrerer Elemente gewechselt wird, falls eine einen ersten Druck (SH1) übersteigende Druckkraft detektiert wird, während detaillierte Information über ein bestimmtes Element als ein Detailinformationsanzeigebildschirm auf der Anzeigeeinrichtung angezeigt wird,
wobei eine Steuerung derart durchgeführt wird, dass im Falle nach dem Wechseln der Anzeige der Anzeigeeinrichtung auf den Listenbildschirm:
falls detektiert wird, dass nach dem Wechseln eine Bedienung des Bewegens einer Berührungsposition durchgeführt wird (S302-YES), Scrollen einer Anzeige mittels Wechseln mindestens mancher der mehreren auf dem Listenbildschirm angezeigten Elemente durchgeführt wird, und zwar bis (S308-YES) die detektierte Druckkraft einen zweiten Druck (SH2) größer als der erste Druck (SH1) übersteigt oder bis die Berührung beendet wird (S310-YES), und falls die Druckkraft den zweiten Druck (SH2) übersteigt, die Anzeige der Anzeigeeinrichtung auf einen anderen Listenbildschirm zum Anzeigen von mehr Elementen als der Listenbildschirm gewechselt wird (S306);
falls ohne Detektion einer Bedienung des Bewegens einer Berührungsposition (S302-NO) die detektierte Druckkraft gleich oder kleiner als ein dritter Druck (SH1'; S303-NO) kleiner als der erste Druck (SH1) wird, die Anzeige (S311) zurück auf den Detailinformationsanzeigebildschirm zum Anzeigen detaillierter Information über das bestimmte Element gewechselt wird,
falls jedoch die detektierte Druckkraft den zweiten Druck (SH2; S304-YES) größer als der erste Druck (SH1) übersteigt, die Anzeige der Anzeigeeinrichtung auf den anderen Listenbildschirm zum Anzeigen von mehr Elementen als der Listenbildschirm gewechselt wird;
und wobei ein jeweiliges der mehreren Elemente ein Bild ist und der Detailinformationsanzeigebildschirm ein Bildschirm ist, auf welchem ein einziges Bild angezeigt wird.

2. Verfahren nach Anspruch 1, umfassend, ansprechend auf eine Berührungsbedienung zum Auswählen eines der mehreren auf dem Listenbildschirm angezeigten Elemente, das Durchführen einer Steuerung derart, dass der Listenbildschirm auf einen Bildschirm zum Anzeigen detaillierter Information über das mittels der Berührungsbedienung ausgewählte Element gewechselt wird.

3. Verfahren nach Anspruch 1 oder 2, ferner umfassend Durchführen einer Steuerung derart, dass die Anzeige der Anzeigeeinrichtung auf einen Detailinformationsanzeigebildschirm für ein anderes, vom bestimmten Element verschiedenes Element (S204) gewechselt wird, falls die Anzeigeeinrichtung gerade detaillierte Information über das bestimmte Element anzeigt, eine Bedienung einer Bewegung einer Berührungsposition durchgeführt wird und die detektierte Druckkraft den ersten Druck nicht übersteigt.

4. Verfahren nach einem der Ansprüche 1 bis 3,
wobei mehrere Berührungsbedienungen detektiert werden, und
wobei, falls sich mehrere detektierte Berührungspositionen einander nahe kommen, während die Anzeigeeinrichtung gerade detaillierte Information über ein bestimmtes Element anzeigt, eine Steuerung derart durchgeführt wird, dass die Anzeige der Anzeigeeinrichtung auf einen Listenbildschirm zum Anzeigen mehrerer Elemente gewechselt wird (S206 YES, S210).

5. Verfahren nach einem der Ansprüche 1 bis 4, umfassend das Durchführen einer Steuerung derart, dass mehrere auf dem Listenbildschirm anzuzeigende Elemente von einer detektierten Berührungsposition und einer den ersten Druck übersteigenden detektierten Druckkraft abhängen, falls der Listenbildschirm ansprechend auf die den ersten Druck übersteigende detektierte Druckkraft angezeigt wird, während die Anzeigeeinrichtung gerade detaillierte Information über ein bestimmtes Element anzeigt.

6. Elektronische Vorrichtung, umfassend:
eine Berührungsdetektionseinrichtung (112), die konfiguriert ist, eine Berührungsbedienung auf einer Bedienungsoberfläche zu detektieren;
eine Druckdetektionseinrichtung, die konfiguriert ist, eine Druckkraft der durch die Berührungsdetektionseinrichtung detektierten Berührungsbedienung auf der Bedienungsoberfläche zu detektieren; und
eine Anzeigesteuereinrichtung (101), die konfiguriert ist, das Verfahren nach Anspruch 1 bis 5 auszuführen.

7. Elektronische Vorrichtung nach Anspruch 6, wobei die Bedienungsoberfläche eine Anzeigeoberfläche der Anzeigeeinrichtung ist.

8. Computerprogramm zum Veranlassen der Vorrichtung nach einem der Ansprüche 6 oder 7, die Schritte des Verfahrens nach einem der Ansprüche 1 bis 5 auszuführen.

9. Computerlesbares Speichermedium, das ein Programm nach Anspruch 8 speichert.

## Revendications

1. Procédé de commande d'un dispositif électronique, le procédé comprenant les étapes consistant à :
détecter une opération de toucher sur une surface d'exploitation ;
détecter une force de pression, sur la surface d'exploitation, de l'opération de toucher détectée ; et
mettre en œuvre une commande de sorte que, dans un cas dans lequel est détectée une force de pression dépassant une première pression (SH1) tandis que des informations détaillées concernant un élément particulier sont affichées en tant qu'écran d'affichage d'informations détaillées sur un moyen d'affichage, l'affichage du moyen d'affichage commute à un écran de liste ayant pour objet d'afficher une pluralité d'éléments ;
dans lequel la commande est mise en œuvre de sorte que, après la commutation de l'affichage par le moyen d'affichage à l'écran de liste :
dans un cas dans lequel il est détecté qu'une opération de déplacement d'une position de toucher est mise en œuvre (S302-OUI) après la commutation, un déroulement d'affichage soit mis en œuvre en commutant au moins certains de la pluralité d'éléments affichés sur l'écran de liste, jusqu'à ce que (S308-OUI) la force de pression détectée dépasse une deuxième pression (SH2) supérieure à la première pression (SH1), ou jusqu'à ce que le toucher soit relâché (310-OUI) et, dans un cas dans lequel la force de pression dépasse la deuxième pression (SH2), l'affichage du moyen d'affichage commute à un autre écran de liste pour afficher davantage d'éléments que l'écran de liste (S306) ;
dans un cas dans lequel, en l'absence d'une détection d'une opération de déplacement d'une position de toucher (S302-NON), la force de pression détectée devient inférieure ou égale à une troisième pression (SH1' ; S303-NON) inférieure à la première pression (SH1), l'affichage commute (S311) en retour à l'écran d'affichage d'informations détaillées pour afficher des informations détaillées concernant l'élément particulier,
si, au lieu de cela, la force de pression détectée dépasse la deuxième pression (SH2 ; S304-OUI) supérieure à la première pression (SH1), l'affichage du moyen d'affichage commute à l'autre écran de liste pour afficher davantage d'éléments que l'écran de liste ;
et dans lequel chacun de la pluralité d'éléments est une image, et l'écran d'affichage d'informations détaillées est un écran sur lequel est affichée une seule image.

2. Procédé selon la revendication 1, comprenant une étape consistant à, en réponse à une opération de toucher ayant pour objet de sélectionner l'un quelconque de la pluralité d'éléments affichés sur l'écran de liste, mettre en œuvre une commande de sorte que l'écran de liste commute à un écran pour afficher des informations détaillées concernant l'élément sélectionné par l'opération de toucher.

3. Procédé selon la revendication 1 ou 2, comprenant en outre une étape consistant à mettre en œuvre une commande de sorte que, dans un cas dans lequel le moyen d'affichage affiche des informations détaillées concernant un élément particulier, dans lequel une opération de déplacement d'une position de toucher est mise en œuvre et dans lequel la force de pression détectée ne dépasse pas la première pression, l'affichage du moyen d'affichage commute à un écran d'affichage d'informations détaillées d'un autre élément différent de l'élément particulier (S204).

4. Procédé selon l'une quelconque des revendications 1 à 3,
dans lequel une pluralité d'opérations de toucher sont détectées, et
dans lequel, dans un cas dans lequel une pluralité de positions de toucher détectées s'approchent les unes des autres tandis que le moyen d'affichage affiche des informations détaillées concernant un élément particulier, une commande est mise en œuvre de sorte que l'affichage du moyen d'affichage commute à un écran de liste pour afficher une pluralité d'éléments (S206 OUI, S210).

5. Procédé selon l'une quelconque des revendications 1 à 4, comprenant en outre une étape consistant à mettre en œuvre une commande de sorte que, dans un cas dans lequel l'écran de liste est affiché en réponse à une force de pression détectée dépassant la première pression tandis que le moyen d'affichage affiche des informations détaillées concernant un élément particulier, une pluralité d'éléments à afficher sur l'écran de liste dépendent d'une position détectée d'un toucher et de la force de pression détectée dépassant la première pression.

6. Dispositif électronique, comprenant :
un moyen de détection de toucher (112) configuré pour détecter une opération de toucher sur une surface d'exploitation ;
un moyen de détection de pression configuré pour détecter une force de pression, sur la surface d'exploitation, de l'opération de toucher détectée par le moyen de détection de toucher ; et
un moyen de commande d'affichage (101) configuré pour mettre en œuvre le procédé selon les revendications 1 à 5.

7. Dispositif électronique selon la revendication 6, dans lequel la surface d'exploitation est une surface d'affichage du moyen d'affichage.

8. Programme informatique destiné à amener le dispositif selon l'une quelconque des revendications 6 et 7 à exécuter les étapes du procédé selon l'une quelconque des revendications 1 à 5.

9. Support d'informations lisible par ordinateur contenant en mémoire un programme selon la revendication 8.
